**Europäisches Patentamt**

**European Patent Office**

**Office européen des brevets**

(19)

(11) Veröffentlichungsnummer : **0 370 374 B1**

(12)

# EUROPÄISCHE PATENTSCHRIFT

(45) Veröffentlichungstag der Patentschrift :
**02.09.92 Patentblatt 92/36**

(51) Int. Cl.$^5$ : **B29B 7/74**

(21) Anmeldenummer : **89121127.8**

(22) Anmeldetag : **15.11.89**

(54) **Vorrichtung zum Dosieren und Mischen von zwei flüssigen Reaktionskomponenten.**

(30) Priorität : **22.11.88 DE 3839390**

(43) Veröffentlichungstag der Anmeldung :
**30.05.90 Patentblatt 90/22**

(45) Bekanntmachung des Hinweises auf die
Patenterteilung :
**02.09.92 Patentblatt 92/36**

(84) Benannte Vertragsstaaten :
**AT BE CH DE ES FR GB GR IT LI LU NL SE**

(56) Entgegenhaltungen :
**EP-A- 0 326 510**
**DE-A- 2 060 961**

(56) Entgegenhaltungen :
**DE-A- 2 718 120**
**FR-A- 1 029 895**
**US-A- 3 008 808**
**US-A- 3 079 090**
**US-A- 3 146 950**

(73) Patentinhaber : **Seibicke, Wilfried**
**Fasanenstrasse 139**
**W-8025 Unterhaching (DE)**

(72) Erfinder : **Seibicke, Wilfried**
**Fasanenstrasse 139**
**W-8025 Unterhaching (DE)**

(74) Vertreter : **Sandmann, Joachim, Dr.**
**Hirtenstrasse 19**
**W-8012 Ottobrunn (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Vorrichtung zum Dosieren und Mischen von zwei flüssigen Reaktionskomponenten, insbesondere Silikon und einem Härter, mit zwei in einem Gehäuse angeordneten Speicherkammern für die beiden Komponenten, denen jeweils eine volumetrische Fördereinrichtung mit einem eigenen Förderkanal zugeordnet ist, der in eine gemeinsame Mischdüse mündet.

Eine derartige Dosier- und Mischvorrichtung ist bereits bekannt (DE-PS 34 20 323). Die bekannte Vorrichtung ist zum Abgeben von Klebe-, Füll-, Dicht- oder Spachtelmassen vorgesehen, die aus zwei Komponenten im Verhältnis 1:1 gemischt werden. Das Gehäuse umschließt zwei nebeneinander angeordnete zylindrische Kammern von gleichem Querschnitt und gleicher Länge, in die - durch Handbetätigung wie bei einer Kartuschen-Pistole - zwei Kolben gleichmäßig eingefahren werden, um die Komponenten durch die Förderkanäle der Mischdüse zuzuführen. Die Austrittsenden der beiden Förderkanäle lassen sich durch eine von Hand erfolgende Axialverstellung einer Verschlußkappe verschließen, was bei einer Unterbrechung des Abgabevorgangs geschieht, damit nach einer Auswechslung der Mischdüse der restliche Inhalt der beiden Speicherkammern erneut abgegeben werden kann, ohne daß die Strömungswege der beiden Komponenten durch eine Aushärtung blockiert sind.

Die bekannte Vorrichtung ist als Handgerät ausgeführt, dessen Düse bzw. Austrittstülle sich zwar an die Verwendungsstelle heranführen läßt, bei dem die Handhabung insgesamt jedoch dadurch wesentlich erschwert ist, daß das Gerät sowohl gehalten wie auch zur Verlagerung der beiden Kolben betätigt werden muß. Es gibt aber Anwendungsfälle, bei denen es zweckmäßig wäre, wenn die Bedienungsperson beide Hände frei hätte, um den oder die Gegenstände zu handhaben, an die das Material abgegeben werden soll. Des weiteren ist beim bekannten Handgerät aus Bedienungsgründen das Gewicht begrenzt. Da bereits zwei Komponenten aufzunehmen und zu speichern sind, können nur vergleichsweise kleine Speicherkammern vorgesehen sein. Dieses führt zu dem Nachteil, daß nur vergleichsweise kleine und damit teure Kartuschen oder Verpackungseinheiten eingesetzt werden können und daß diese entsprechend häufig neu eingesetzt werden müssen.

Dementsprechend liegt der Erfindung die Aufgabe zugrunde, die Vorrichtung zum Dosieren und Mischen so auszubilden, daß sie sich in Anpassung an die jeweils durchzuführenden Tätigkeiten einfacher und vielseitiger sowie mit geringerem Aufwand benutzen läßt, ohne daß besondere Anforderungen an die zu beziehenden Reaktionskomponenten zu beachten sind.

Diese Aufgabe wird erfindungsgemäß dadurch gelöst, daß das Gehäuse einen Standboden aufweist, daß die Speicherkammern mit verschließbaren Einfüllöffnungen versehen sind, daß die beiden Förderkanäle jeweils einen außerhalb des Gehäuses verlaufenden flexiblen Förderschlauch aufweisen, daß im Abstand oberhalb des Standbodens vom Gehäuse eine Halterung vorragt und daß die an die gehäusefernen Enden der beiden Förderschläuche angeschlossene Mischdüse wahlweise in einer festen Abgabestellung mit abwärts weisender Austrittsöffnung mit der Halterung verbindbar ist oder mittels der flexiblen Förderschläuche frei bewegbar ist.

Ein an eine volumetrisch arbeitende Dosierpumpe angeschlossener Förderkanal in Form eines flexiblen Förderschlauchs, der zu einer in einer Spritzpistole angeordneten Mischdüse führt, ist allerdings bereits bekannt (DE-A-2 718 120). Dort ist die Vorrichtung zwar gleichfalls mit zwei Speicherkammern und zwei Pumpen ausgerüstet, diese Speicherkammern sind jedoch von zwei Versandflaschen gebildet, die weder einzeln noch gemeinsam von einem Vorrichtungsgehäuse umschlossen sind. Die beiden Flaschen sind zu beiden Seiten einer umgekehrt u-förmigen Tragplatte für die Pumpen angeordnet und stehen jeweils auf einem nach außen abgewinkelten endseitigen Schenkel der Tragplatte, wobei diese beiden Schenkel gemeinsam einen Standboden bilden. Die beiden Flaschen enthalten die gleiche Flüssigkeit, nämlich einen katalysator, und können nur nacheinander entleert werden, weswegen von der Vorrichtung auch nur ein einziger Förderschlauch zur Spritzpistole führt, deren Mischdüse durch zwei nicht mit der beschriebenen Vorrichtung sondern mit anderen Quellen verbundenen Schläuchen ein Kunstharz bzw. Druckluft zugeführt werden kann, um mit der aus den Flaschen der Vorrichtung zugeführten Flüssigkeit vermischt zu werden.

Da die Vorrichtung als Standgerät konzipiert ist können zwei große Speicherkammern vorgesehen sein, deren Gewicht und insbesondere Füllgewicht den Abgabevorgang nicht behindert. Dabei lassen sich die beiden flüssigen Komponenten aus großen Gebinden in die Speicherkammern einfüllen, so daß die Reaktionskomponenten preisgünstig bezogen werden können. Das Vorsehen des Förderschlauchs und der seitlich vorragenden Halterung schafft in einfacher Weise die Möglichkeit, je nach Anwendungsfall die Mischdüse in einer gewünschten Orientierung an eine bestimmte Stelle oder an einen Gegenstand wie zum Beispiel eine auszufüllende Form heranzuführen oder aber die Mischdüse mit der Halterung zu verbinden, so daß beispielsweise die auszufüllende Form unter die Düse geführt und während des Abgabevorgangs bewegt oder sonstwie gehandhabt werden kann. Dabei kann sowohl eine ausreichende Standsicherheit der Vorrichtung wie auch eine genügende Bodenfreiheit unterhalb der in der Abgabe stellung befindlichen Mischdüse erzielt werden, auch wenn die Vorrichtung auf einer Tischplatte steht, die sich ebenfalls unterhalb der abwärts weisenden Mischdüse erstreckt.

Bei einer zweckmäßigen Ausführungsform ist die Mischdüse auswechselbar an einem Handgriff befestigt, der bis zum Wirksamwerden eines Anschlags in der festen Abgabestellung in eine angepaßte Halterungsöffnung einschiebbar ist. In diesem Falle ist ein sehr einfacher und schneller Übergang zwischen den beiden vorgesehenen Arbeitsweisen möglich, nämlich die mit einer fest angeordneten und abgestützten Mischdüse und die mit einer von Hand beweglich geführten Mischdüse. Dabei sind die exakte Anordnung in der Halterung ebenso wie eine gute Lage in der Hand gewährleistet, ohne daß dazu Vorrichtungsteile anzubringen bzw. abzunehmen sind.

Es ist von Vorteil, wenn die beiden volumetrischen Fördereinrichtungen entsprechend dem Mischungsverhältnis der beiden Komponenten ausgelegte Dosierpumpen sind. Solche Dosierpumpen erleichtern nicht nur den Abgabevorgang, insbesondere ergibt sich die Möglichkeit einer kontinuierlichen und gleichmäßigen Abgabe beider Komponenten in grundsätzlich beliebigen Mischungsverhältnissen. Es besteht daher keine Beschränkung auf die Abgabe von Komponenten, die im Verhältnis 1:1 gemischt werden müssen. In Übereinstimmung damit wurde auch die erfindungsgemäße Vorrichtung für die Abgabe eines Silikonmaterials und eines Härters (Katalysators) im Mischungsverhältnis 10:1 entwickelt.

Bei einer zweckmäßigen Ausführungsform sind die Dosierpumpen Zahnradpumpen. Geeignete Zahnradpumpen wurden bisher als Schmiermittelpumpen eingesetzt. Sie ermöglichen eine sehr genaue Dosierung auch sehr kleiner Mengen, wobei mit dem An- und Abschalten der Abgabevorgang praktisch verzögerungsfrei beginnt bzw. unterbrochen wird, was sich ebenfalls vorteilhaft auswirkt.

Ferner ist vorgesehen, daß den beiden Fördereinrichtungen (Zahnradpumpen) ein gemeinsamer elektrischer Antriebsmotor zugeordnet ist. Dieses ist bei einem fest vorgegebenen Mischungsverhältnis problemlos möglich, also für den üblicherweise gegebenen Fall, daß stets mit den beiden gleichen Komponenten gearbeitet wird. Der gemeinsame Antriebsmotor vereinfacht nicht nur die Vorrichtung sondern stellt auch sicher, daß die beiden Komponenten unter allen Umständen immer gleichzeitig abgegeben werden.

Bei einer bevorzugten Ausführungsform umschließt das Gehäuse außer den beiden Speicherkammern auch den Antriebsmotor mit dem Getriebe und die beiden Fördereinrichtungen (Zahnradpumpen). Dadurch ergibt sich eine ansprechende, kompakte und einheitliche Vorrichtung, die sich auch bequem transportieren und reinigen läßt.

Ein Ausführungsbeispiel der Erfindung wird nachfolgend anhand einer schematischen Zeichnung näher erläutert. Es zeigen:

Fig. 1 eine teilweise geschnittene Vorderansicht der Vorrichtung;

Fig. 2 eine teilweise geschnittene Seitenansicht der Vorrichtung;

Fig. 3 einen Schnitt durch den in die Vorrichtung gemäß Fig. 1 und 2 integrierten Speicherbehälter für die beiden Komponenten und

Fig. 4 einen Axialschnitt durch die in Fig. 2 in der Abgabestellung angeordnete Mischdüse mit Handgriff.

Die dargestellte und nachfolgend beschriebene Vorrichtung ist vorgesehen, um ein Silikonmaterial und einen allgemein als Katalysator bezeichneten Härter im Mischungsverhältnis 10:1 abzugeben. Ein entsprechendes additionsvernetztes Silikon ist im Gegensatz zu einem im Verhältnis 1:1 gemischten Silikon weniger spröde, elastischer und besonders reißfest. Es eignet sich damit gut für das Dublieren oder Herstellen von Formen von Dentalmodellen. Die Einsatzmöglichkeiten der Vorrichtung gehen jedoch über diesen speziellen Verwendungsfall weit hinaus.

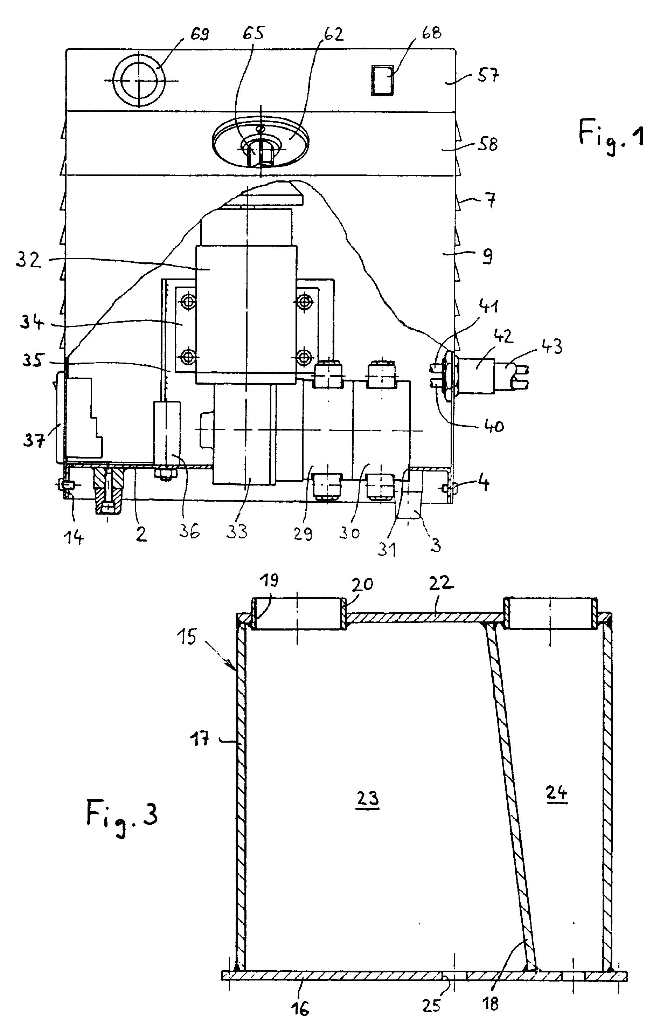

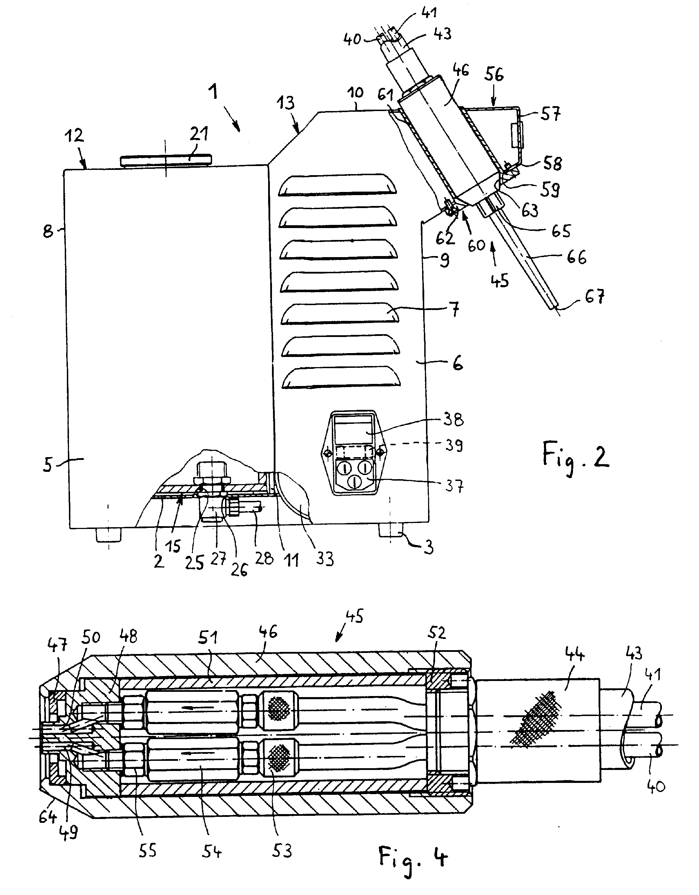

Gemäß Figuren 1 und 2 weist die Vorrichtung ein Gehäuse 1 mit einer im wesentlichen rechteckförmigen Bodenplatte 2 auf, die vier Füße 3 beispielsweise aus Gummi trägt. An der Bodenplatte 2 sind mittels Schrauben 4 an gegenüberliegenden Seiten zwei hintere Seitenwände 5 und zwei vordere Seitenwände 6 befestigt, die mit Lüftungsjalousien 7 versehen sind. Ferner sind eine Rückwand 8 und eine Vorderwand 9 sowie eine entsprechend der Darstellung abgewinkelte Deckelwand 10 vorgesehen, die ggf. entsprechend der Unterteilung der Seitenwände 5, 6 zweiteilig ausgeführt sein kann. Zwischen der Rückwand 8 und der Vorderwand 9 ragt von der Bodenplatte 2 eine Zwischenwand 11 auf, die innerhalb des Gehäuses 1 mit den hinteren Seitenwänden 5 und der Rückwand 8 ein Speichergehäuse 12 und mit den vorderen Seitenwänden 6 und der Vorderwand 9 ein Pumpengehäuse 13 bildet.

Die Gehäusewände können zweckmäßigerweise aus einem Stahlblech hergestellt sein, das sich abwinkeln und ggf. mit ausgeklinkten Verhakungsabschnitten versehen läßt, so daß die Wände auch mittels Steckbefestigungen zusammengehalten werden können. Auch die Bodenplatte 2 ist aus stabilem tragfähigem Stahlblech hergestellt und mit nach unten abgewinkelten Randleisten 14 versehen, in welche die Schrauben 4 eingreifen.

Das Speichergehäuse 12 nimmt einen etwa quaderförmigen Speicherbehälter 15 auf, der in Fig. 3 im Querschnitt dargestellt ist und aus Kunststoffteilen (Hart-PVC) zusammengeschweißt ist. Dabei handelt es sich um einen Behälterboden 16, vier Behälterwände 17, eine Zwischenwand 18 und eine Deckelwand 22 mit zwei Einfüllöffnungen 19 mit eingeschweißten Einfüllstutzen 20, die jeweils durch einen Deckel 21 verschließbar sind. Die beiden Deckel 21 liegen in Fig. 2 hintereinander, so daß dort nur ein Deckel zu sehen ist. Die Zwischenwand 18 teilt den Raum innerhalb des Speicherbehälters 15 in zwei Speicherkammern 23 und 24.

Anstelle des Speicherbehälters 15 mit zusammengeschweißten Wänden 16, 17, 18, 22 können auch getrennte tiefgezogene und verklebte Behälter für die beiden Speicherkammern 23, 24 vorgesehen sein. Diese weisen wie aus Fig. 3 ersichtlich unterschiedliche Querschnitte und damit Volumina auf, wobei die größere Speicherkammer 23 für die mit größerem Durchsatz zugemischte Komponente und die kleinere Speicherkammer 24 für die mit kleinerem Durchsatz zugemischte Komponente vorgesehen sind. Beispielsweise kann der Speicherbehälter 15 insgesamt ein Speichervolumen von ca. 10 l aufweisen, von denen auf die Speicherkammer 23 ca. 8 l und auf die Speicherkammer 24 ca. 2 l entfallen.

Jede Speicherkammer 23, 24 ist mit einer Bodenöffnung 25 versehen, die gemäß Fig. 2 auf eine Öffnung 26 in der Bodenplatte 2 ausgerichtet ist. In jede Bodenöffnung 25 ist mit abdichtender Wirkung ein Auslauf 27 eingebaut an den ein Verbindungsschlauch 28 aus Kunststoff angeschlossen ist, der unterhalb der Bodenplatte 2 verläuft. Auch die beiden Ausläufe 27 und Verbindungsschläuche 28 liegen in Fig. 2 hintereinander und sind deswegen dort nur einmal zu sehen. Wie aus Fig. 1 zu ersehen sind im Pumpengehäuse 13 zwei volumetrische Fördereinrichtungen bildende Dosierpumpen in Form von Zahnradpumpen 29, 30 angeordnet, die durch eine Aussparung 31 in der Bodenplatte 2 ragen. Die beiden Zahnradpumpen 29, 30 weisen entsprechend der verschieden dargestellten Breite unterschiedliche Förderdurchsätze auf, wie es dem unterschiedlichen Mischungsverhältnis von beispielsweise 10:1 entspricht. Die beiden Verbindungsschläuche 28 unterhalb der Bodenplatte 2 sind dementsprechend an die betreffende Zahnradpumpe 29 bzw. 30 angeschlossen.

Die beiden Zahnradpumpen 29, 30 werden von einem Elektromotor 32 über ein Getriebe 33 und eine gemeinsame Antriebswelle angetrieben. Der Elektromotor 32 ist über eine angeschraubte Flanschplatte 34 und eine Tragkonsole 35 an der Bodenplatte 2 abgestützt. Auf dieser ist auch ein dem Elektromotor 32 zugeordneter Kondensator 36 angeordnet. Für die Stromzuführung zum Elektromotor 32 ist in die eine vordere Seitenwand 6 ein Gerätestecker 37 mit einem Kippschalter 38 und einer Feinsicherung 39 eingebaut.

An jede Zahnradpumpe 29, 30 ist in nicht dargestellter Weise ein eigener Förderkanal in Form eines flexiblen Förderschlauchs 40 bzw. 41 angeschlossen. Diese flexiblen Förderschläuche 40, 41 sind gemäß Fig. 1 mittels einer Verschraubung 42 durch die nicht mit dem Gerätestecker 37 versehene vordere Seitenwand 6 hindurch geführt. Außerhalb des Gehäuses 1 sind die beiden Förderschläuche 40, 41 in einem Schutzschlauch 43 zusammengefaßt. Diese flexible Schlauchanordnung 40, 41, 43 ist an ihrem äußeren freien Ende über eine Verschraubung 44 mit einer Ausbringeinrichtung 45 verbunden, wie es in Fig. 4 dargestellt ist.

Diese Ausbringeinrichtung 45 weist einen im wesentlichen hohlzylindrischen Handgriff 46 auf, in dessen abgestufte Bohrung axial hintereinander ein Verschluß 47, eine Austrittsdüse 48 mit zwei axial ausmündenden Austrittskanälen 49 und 50 und ein Abstandsrohr 51 angeordnet und durch eine Mutter 52 mit Außengewinde axial angedrückt sind, die in das mit Gewinde versehene hintere Bohrungsende des Handgriffs 46 eingeschraubt ist.

Wie aus Fig. 4 zu ersehen sind die Förderschläuche 40 und 41 durch die Verschraubung 44 hindurch in den vom Abstandsrohr 51 umschlossenen Raum eingeführt und jeweils über eine Schlauchverschraubung 53, ein Rückschlagventil 54 und einen Doppelnippel 55 an den Austrittskanal 49 bzw. 50 angeschlossen.

Gemäß Figuren 1 und insbesondere 2 weist das Pumpengehäuse 13 an seinem oberen Ende eine nach vorne über die Bodenplatte 2 hinaus vorragende Gehäuseerweiterung 56 auf, die sich über die ganze Breite des Gehäuses 1 erstreckt und eine gegenüber der Deckelwand 10 nach unten abgewinkelte Frontleiste 57 sowie eine an deren unteres Ende anschließende schräg nach vorne unten weisende Halterungswand 58 aufweist.

Diese Halterungswand 58 ist mit einer kreisförmigen Öffnung 59 versehen, in die von unten eine Halterung 60 mit einem Halterungsrohr 61 und einer Anschlagplatte 62 eingesetzt ist, die mittels Schrauben an die Halterungswand 58 angezogen ist. Das Halterungsrohr 61 ist im wesentlichen bündig mit der Deckelwand 10 schräg abgeschnitten. Das Halterungsrohr 61 ist mit seinem Innendurchmesser dem Außendurchmesser des Handgriffs 46 angepaßt. Die Anschlagplatte 62 springt radial einwärts in das Halterungsrohr 61 vor und ist mit einem sich nach unten konisch verjüngenden Anschlag 63 versehen.

Auf Grund dieser Ausbildung kann wie in Fig. 2 gezeigt der Handgriff 46 in geneigter Stellung von oben in die Halterung 60 eingeschoben werden, bis das vordere konische Ende 64 des Handgriffs 46 am Anschlag 63 anliegt. Dabei ist die Ausbring- einrichtung 45 im wesentlichen spielfrei in einer vorbestimmten Abgabestellung gehalten.

In das vordere offene Ende des Handgriffs 46 kann wie in Fig. 2 dargestellt eine auswechselbare Mischdüse 65 eingesetzt werden, die mit dem Verschluß 47 zusammenwirkt und in die dann die beiden Austrittskanäle 49 und 50 einmünden. Die Mischdüse 65 geht in eine Tülle 66 mit einer Austrittsöffnung 67 über. Statisch wirkende Mischdüsen wie die Mischdüse 65 sind der Fachwelt bekannt, so daß auf eine nähere Beschreibung verzichtet werden kann. Es sei jedoch darauf hingewiesen, daß die aus den beiden Speicherkammern 23 und 24 kommenden und mittels der Zahnradpumpen 29, 30 geförderten flüssigen Reaktionskomponenten erstmals in der Mischdüse 65 aufeinandertreffen, so daß im Falle einer Arbeitsunterbrechung lediglich die Mischdüse 65 entweder zu reinigen oder aber auszuwechseln ist, damit die kurzzeitig nach ihrer Zusammenführung bzw. Mischung aushärtenden Komponenten erneut mittels der Vorrichtung abgegeben werden können.

Zur einfachen Bedienung und Kontrolle der Vorrichtung sind in der Frontleiste 57 ein Druckschalter 68 und eine Signallampe 69 angeordnet.

Die Bedienung der beschriebenen Vorrichtung und das Arbeiten mit ihr ergeben sich bereits aus der vorstehenden Beschreibung. Nach dem Einfüllen der beiden Reaktionskomponenten in die Speicherkammern 23 bzw. 24 und dem Anbringen einer neuen bzw. von Aushärtungen freien Mischdüse 65 sowie dem Anschließen des elektrischen Stroms wird der Abgabevorgang dadurch eingeleitet, daß die beiden Zahnradpumpen 29 und 30 durch Eindrücken und Eingedrückthalten des Druckschalters 68 angetrieben werden, was durch die Signallampe 69 angezeigt wird. Durch Loslassen des Druckschalters 68 wird der Abgabevorgang sofort beendet. Wichtig ist dabei, daß die Austrittsöffnung 67 von der Vorrichtung ungehindert gut zugänglich ist, was durch einen entsprechend großen Abstand zur Vorderwand 9 sowie zur von den Füßen 3 bestimmten Standfläche der Vorrichtung gewährleistet ist. Im übrigen kann je nach Anwendungs- fall die Ausbringeinrichtung 45 auch aus der Halterung 60 entnommen und von Hand gehalten und geführt werden, wozu die Schlauchanordnung 40, 41, 43 zwischen dem Gehäuse 1 und der Ausbringeinrichtung 45 ausreichende Länge und Flexibilität aufweist. Dementsprechend kann die Vorrichtung sowohl als Standgerät mit feststehender Mischdüse 65 (Fig. 2) wie auch mit einer von Hand frei bewegbaren Mischdüse 65 verwendet werden. In diesem Zusammenhang ist der Handgriff 46 ergonomisch geformt. Er kann evtl. auch nach Art eines Pistolengriffs ausgebildet sein. Die köcherförmige Halterung 60 für den Betrieb mit feststehender Mischdüse 65 ist der Form des Handgriffs 46 angepaßt, um diesen im wesentlichen formschlüssig in vorgegebener Stellung aufzunehmen und zu lagern, ohne daß das Einführen und Entnehmen des Handgriffs 46 und damit der Übergang zwischen den beiden Betriebsweisen durch Befestigungs- bzw. Lösemaßnahmen erschwert wird.

## Patentansprüche

1. Vorrichtung zum Dosieren und Mischen von zwei, flüssigen Reaktionskomponenten, insbesondere Silikon und einem Härter, mit zwei in einem Gehäuse (1) angeordneten Speicherkammer (23, 24) für die beiden Komponenten, denen jeweils eine volumetrische Fördereinrichtung (29, 30) mit einem eigenen Förderkanal (40, 41) zugeordnet ist, der in eine gemeinsame Mischdüse (65) mündet, dadurch **gekennzeichnet,**
   – daß das Gehäuse (1) einen Standboden (2, 3) aufweist,
   – daß die Speicherkammern(23, 24) mit verschließbaren Einfüllöffnungen (19) versehen sind,
   – daß die beiden Förderkanäle jeweils einen außerhalb des Gehäuses (1) verlaufenden flexiblen Förderschlauch (40, 41) aufweisen,
   – daß im Abstand oberhalb des Standbodens (2, 3) vom Gehäuse (1) eine Halterung (60) vorragt und
   – daß die an die gehäusefernen Enden der beiden Förderschläuche (40, 41) angeschlossene Mischdüse (65) wahlweise in einer festen Abgabestellung mit abwärts weisender Austrittsöffnung (67) mit der Halterung (60) verbindbar ist oder mittels der flexiblen Förderschläuche frei bewegbar ist.

2. Vorrichtung nach Anspruch 1, dadurch **gekennzeichnet,** daß die Mischdüse (65) auswechselbar an einem Handgriff (46) befestigt ist, der bis zum Wirsamwerden eines Anschlags (63) in der festen Abgabestellung in eine angepaßte Halterungsöffnung (59, 61) einschiebbar ist.

3. Vorrichtung nach Anspruch 1 oder 2, dadurch **gekennzeichnet,** daß die beiden volumetrischen Fördereinrichtungen entsprechend dem Mischungsverhältnis der beiden Komponenten ausgelegte Dosierpumpen (29, 30) sind.

4. Vorrichtung nach Anspruch 3, dadurch **gekennzeichnet,** daß die beiden Dosierpumpen Zahnradpumpen (29, 30) sind.

5. Vorrichtung nach einem der Ansprüche 1 bis 4, dadurch **gekennzeichnet,** daß den beiden Fördereinrichtungen (29, 30) ein gemeinsamer elektrischer Antriebsmotor (32) zugeordnet ist.

6. Vorrichtung nach Anspruch 5, dadurch **gekennzeichnet,** daß das Gehäuse (1) außer den beiden Speicherkammern (23, 24) auch den Antriebsmotor (32) mit dem Getriebe (33) und die beiden Fördereinrichtungen (29, 30) umschließt.

## Claims

1. Device for dosing and mixing two liquid reaction components, especially silicone and a hardener, said device having in a housing (1) two storage chambers (23, 24) for both components, each of which is associated with a volumetric feeding means (29, 30) with a separate feeding conduit (40, 41) which discharges into a common mixing nozzle (65), **characterized** in
   – that the housing (1) has a supporting bottom (2, 3),
   – that the storing chambers (23, 24) are fitted with filling apertures (19) capable of being closed,
   – that both feeding conduits have each a flexible feeding hose (40, 41) run outside of the housing (1),
   – that a bracket (60) protrudes from the housing (1) at a level above the supporting bottom (2, 3),
   – that the mixing nozzle (65) which is attached to the ends of both feeding hoses (40, 41) farthest from the housing is selectively capable of being connected with the bracket (60) in a fixed discharging position with an outlet aperture (67) facing downwardly or of being freely moved thanks to the flexible feeding hoses.

2. Device according to claim 1, **characterized** in that the mixing nozzle (65) is replaceably attached to a handle (46) which is capable of being slid into a matching bracket opening (59, 61) until a stop (63) becomes effective in the fixed discharge position.

3. Device according to claim 1 or 2, **characterized** in that both volumetric feeding means are metering pumps (29, 30) designed to correspond to the mixing ratio of both components.

4. Device according to claim 3, **characterized** in that both metering pumps are gear pumps (29, 30).

5. Device according to any of claims 1 to 4, **characterized** in that a common electric drive motor (32) is associated to both feeding means (29, 30).

6. Device according to claim 5, **characterized** in that, besides of the two storing chambers (23, 24, the housing (1) also encloses the drive motor (32) with the gear unit (33) and both feeding means (29, 30).

## Revendications

1. Dispositif de dosage et de mélangeage de deux composants réactifs fluides, plus particulièrement du silicone et d'un durcisseur, ledit dispositif ayant dans un boîtier (1) deux chambres d'accumulation (23, 24) pour les deux composants, à chacune d'elles étant associé un moyen d'alimentation volumétrique (29, 30) muni d'une conduite d'amenée séparée (40, 41) qui débouche dans une buse mélangeuse commune (65), **caractérisé** en ce
   – que le boîtier (1) comprend un fond d'appui (2, 3),
   – que les chambres d'accumulation (23, 24) sont munies d'orifices de remplissage (19) capable d'être obturés,
   – que les deux conduites d'amenée comprennent chacune un tuyau d'amenée flexible (40, 41) posé à l'extérieur du boîtier (1),
   – qu'une attache (60) fait saillie à un endroit au-dessus du fond d'appui (2, 3) du boîtier (1), et
   – que la buse mélangeuse (65), raccordée aux tuyaux d'amenée (40, 41) à leurs extrémités éloignées du boîtier, est capable, d'une façon sélective, d'être connectée, dans une position de décharge fixe, à l'attache (60) avec l'orifice de sortie (67) dirigé vers le bas, ou d'être manipulée librement grâce aux tuyaux d'amenée flexibles.

2. Dispositif selon la revendication 1, **caractérisé** en ce que la buse mélangeuse (65) est attachée de façon remplaçable à une poignée (46) qui est capable d'être introduite en la glissant dans une ouverture adaptée (59, 61) de l'attache jusqu'au point où une butée (63) devient effective dans la position de décharge fixe.

3. Dispositif selon la revendication 1 ou 2, **caractérisé** en ce que les deux moyens d'alimentation volumétrique sont des pompes de dosage (29, 30) étudiées en conformité avec le rapport des deux composants.

4. Dispositif selon la revendication 3, **caractérisé** en ce que les deux pompes de dosage sont des pompes à engrenages (29, 30).

5. Dispositif selon l'une quelconque des revendications 1 à 4, **caractérisé** en ce qu'un moteur électrique d'entraînement commun (32) est associé aux deux moyens d'alimentation (29, 30).

6. Dispositif selon la revendication 5, **caractérisé** en ce que, à part des deux chambres d'accumulation (23, 24), le boîtier (1) renferme aussi le moteur d'entraînement (32) avec le réducteur (33) et les deux moyens d'alimentation (29, 30).

Fig. 1

Fig. 3

8

Fig. 2

Fig. 4